(19) Europäisches Patentamt
European Patent Office
Office européen des brevets

(11) **EP 4 686 280 A1**

(12) **EUROPEAN PATENT APPLICATION**
published in accordance with Art. 153(4) EPC

(43) Date of publication:
**28.01.2026 Bulletin 2026/05**

(21) Application number: **24784017.6**

(22) Date of filing: **08.03.2024**

(51) International Patent Classification (IPC):
***H04W 68/02*** (2009.01)

(52) Cooperative Patent Classification (CPC):
**H04W 68/02; H04W 76/28**

(86) International application number:
**PCT/CN2024/080723**

(87) International publication number:
**WO 2024/207932 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.04.2023 CN 202310401590**

(71) Applicant: **Huawei Technologies Co., Ltd.
Shenzhen, Guangdong 518129 (CN)**

(72) Inventors:
• **XIANG, Hongyu**
**Shenzhen, Guangdong 518129 (CN)**
• **CHEN, Lei**
**Shenzhen, Guangdong 518129 (CN)**
• **XU, Bin**
**Shenzhen, Guangdong 518129 (CN)**
• **HU, Xingxing**
**Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **PAGING METHOD AND APPARATUS**

(57) This application relates to the communication field, and discloses a paging method and apparatus. In the method, a terminal device and a core network device may negotiate at least one piece of coverage time window information, and then the core network device sends a first paging message carrying the at least one piece of coverage time window information to an access network device. The access network device determines, based on the at least one piece of coverage time window information, a coverage time window for sending a paging message, and sends a second paging message to the terminal device in the corresponding coverage time window. This implements coverage time window-based paging alignment between the terminal device and a network.

FIG. 4

**Description**

CROSS-REFERENCE TO RELATED APPLICATIONS

This application claims priority to Chinese Patent Application No. 202310401590.8, filed with the China National Intellectual Property Administration on April 7, 2023 and entitled "PAGING METHOD AND APPARATUS", which is incorporated herein by reference in its entirety.

TECHNICAL FIELD

This application relates to the field of communication technologies, and in particular, to a paging method and apparatus.

BACKGROUND

In a new radio (new radio, NR) system, a terminal device in a radio resource control (radio resource control, RRC) idle (idle) state or an RRC inactive (inactive) state may wake up periodically to monitor a paging (paging) message in a discontinuous reception (discontinuous reception, DRX) manner or an extended discontinuous reception (extended discontinuous reception, eDRX) mechanism. However, in a scenario of discontinuous coverage in a non-terrestrial network (non-terrestrial network, NTN), as a satellite moves, a network covers different areas in different time periods.
For example, for user equipment (user equipment, UE) 1, it is assumed that when the UE 1 is in a cell A, a network coverage time period is from 10:05:00 to 10:10:00; and when the UE 1 is in a cell B, a network coverage time period is from 09:57:00 to 10:03:00. If a network device sends a paging message to the UE 1 in the time period from 10:05:00 to 10:10:00, and the UE 1 has moved from the cell A to the cell B at this time, when the UE 1 is located in the cell B, the UE 1 cannot receive the paging message in the time period from 10:05:00 to 10:10:00 because there is no network coverage in the time period from 10:05:00 to 10:10:00..
In other words, alignment of a paging occasion between the network device and the UE is a problem to be resolved.

SUMMARY

This application provides a paging method and apparatus, to implement coverage time window-based paging alignment between a network and UE.
According to a first aspect, this application provides a paging method. The method may be applied to a first access network device. Specifically, the method includes: The first access network device receives a first paging message, where the first paging message includes at least one piece of coverage time window information; and the first access network device sends a second paging message to a terminal device in a first coverage time window, where the first coverage time window is a coverage time window corresponding to a first location, and the at least one piece of coverage time window information includes the first coverage time window.
According to the foregoing technical solution, the first access network device may send a paging message in a coverage time window corresponding to a first location, to implement coverage time window-based paging alignment between the network and the terminal device, so that the terminal device can receive the paging message.
In a possible implementation, the first location is a location of an area covered by the first access network device.
In a possible implementation, the at least one piece of coverage time window information is reported by the terminal device to a core network device.
In a possible implementation, the at least one piece of coverage time window information is determined by a core network device based on at least one piece of location information reported by the terminal device.
In a possible implementation, the first coverage time window is determined by the first access network device based on the at least one piece of coverage time window information.
In this application, there is a mapping relationship between location information and coverage time window information. Therefore, after the terminal device reports the at least one piece of location information to the core network device, the core network device may determine the at least one piece of coverage time window information based on the mapping relationship.
According to a second aspect, this application further provides a paging method. The method may be applied to a terminal device. Specifically, the method includes: The terminal device reports at least one piece of coverage time window information to a core network device; the terminal device monitors scheduling information of a second paging message in a first coverage time window, where the first coverage time window is a coverage time window corresponding to a first location, and the first coverage time window is determined based on the at least one piece of coverage time window information; and the terminal device receives the second paging message.

According to the foregoing technical solution, the terminal device may monitor and receive a paging message in the coverage time window corresponding to the first location, thereby avoiding a case in which the terminal device may not receive the paging message after the terminal device moves to another location, and improving flexibility.

According to a third aspect, this application further provides a paging method. The method may be applied to a core network device. The method includes: The core network device receives at least one piece of coverage time window information; and the core network device sends a first paging message, where the first paging message includes the at least one piece of coverage time window information.

According to the foregoing technical solution, the core network device may add the at least one piece of coverage time window information to the first paging message (an MGAP paging message) and send the first paging message to the access network device, so that the access network device sends the paging message to a terminal device in a corresponding coverage time window.

According to a fourth aspect, this application further provides a paging method. The method may be applied to a first access network device. Specifically, the method includes: The first access network device receives a first paging message, where the first paging message includes a first location identifier set and a second location identifier set; and the first access network device sends a second paging message to a terminal device, where a cell of the first access network device corresponds to a second location identifier, and the first location identifier set includes the second location identifier.

According to the foregoing technical solution, the first access network device may receive the first paging message that carries a location identifier set, and then send the paging message to a cell to which the first access network device belongs.

In a possible implementation, the first location identifier set is one of the following sets: a tracking area identifier TAI list and a mapped cell identifier (mapped cell ID) list.

In a possible implementation, there is a correspondence between the first location identifier set and a coverage time window. Specifically, there is a correspondence between each location identifier in the first location identifier set and the coverage time window.

According to a fifth aspect, this application further provides a paging method. The method may be applied to a terminal device. Specifically, the method includes: The terminal device reports at least one piece of location information to a core network device; the terminal device monitors scheduling information of a second paging message in a second coverage time window, where the second coverage time window is a coverage time window corresponding to a second location, the second coverage time window is associated with a first location identifier set, and the first location identifier set is determined based on the at least one piece of location information; and the terminal device receives the second paging message. It should be understood that the location information reported by the terminal device may be different from location information used when the terminal device monitors a paging message.

According to the foregoing technical solution, the terminal device may report the at least one piece of location information to the core network device, and may monitor and receive the paging message in a coverage time window corresponding to a location, thereby implementing coverage time window-based paging alignment between the network and the terminal.

According to a sixth aspect, this application further provides a paging method. The method may be applied to a core network device. The method includes: The core network device receives at least one piece of location information; and the core network device sends a first paging message in a second coverage time window, where the first paging message includes a first location identifier set and a second location identifier set, the second coverage time window is associated with the first location identifier set, and the first location identifier set is determined based on the at least one piece of location information.

In a possible implementation, the first location identifier set is one of the following sets: a tracking area identifier TAI list and a mapped cell identifier (mapped cell ID) list.

According to a seventh aspect, this application further provides a paging apparatus. The apparatus may be used in a first access network device, a terminal device, or a core network device, and has a function of implementing the method performed by the first access network device, the terminal device, or the core network device in the first aspect to the sixth aspect.

The paging apparatus may be implemented by hardware, or may be implemented by executing corresponding software by hardware. The hardware or software includes one or more units or modules corresponding to the foregoing functions.

In a possible implementation, the paging apparatus includes a processor. The processor is configured to support the communication apparatus in performing a corresponding function of the first access network device, the terminal device, or the core network device in the foregoing method. The paging apparatus may further include a memory. The memory may be coupled to the processor, and the memory stores program instructions and data that are necessary for the paging apparatus. Optionally, the paging apparatus further includes a communication interface. The communication interface is configured to support communication between the paging apparatus and another device.

In a possible implementation, the paging apparatus includes corresponding functional modules, which are respectively configured to implement the steps in the foregoing method. The function may be implemented by hardware, or may be implemented by executing corresponding software by hardware. The hardware or software includes one or more modules corresponding to the foregoing functions.

In a possible implementation, a structure of the paging apparatus includes a receiving unit and a sending unit. These units may perform corresponding functions in the foregoing method examples. Details are not described herein again.

According to an eighth aspect, a paging apparatus is provided. The paging apparatus includes a processor and an interface circuit. The interface circuit is configured to receive a signal from another paging apparatus other than the paging apparatus and transmit the signal to the processor, or send a signal from the processor to another paging apparatus other than the paging apparatus. The processor is configured to implement the method in any one of the first aspect to the sixth aspect and any possible implementation of any one of the aspects by using a logic circuit or executing code instructions.

According to a ninth aspect, a paging apparatus is provided. The paging apparatus includes a processor and an interface circuit. The interface circuit is configured to receive a signal from another paging apparatus other than the paging apparatus and transmit the signal to the processor, or send a signal from the processor to another paging apparatus other than the paging apparatus. The processor is configured to implement a functional module of the method in any one of the first aspect and the second aspect and any possible implementation of any one of the aspects by using a logic circuit or executing code instructions.

According to a tenth aspect, a computer-readable storage medium is provided. The computer-readable storage medium stores a computer program or instructions. When the computer program or the instructions are executed by a processor, the method according to any one of the first aspect to the sixth aspect and any possible implementation of the first aspect to the sixth aspect is implemented.

According to an eleventh aspect, a computer program product storing instructions is provided. When the instructions are run by a processor, the method according to any one of the first aspect to the sixth aspect and any possible implementation of any one of the first aspect to the sixth aspect is implemented.

According to a twelfth aspect, a chip is provided. The chip includes a processor, may further include a memory, and is configured to implement the method according to any one of the first aspect to the sixth aspect and any possible implementation of the first aspect to the sixth aspect. The chip may alternatively include another module and another discrete device.

According to a thirteenth aspect, a paging system is provided. The paging system includes an apparatus (for example, a first access network) configured to implement the method provided in the first aspect/the fourth aspect, an apparatus (for example, a terminal device) configured to implement the method provided in the second aspect/fifth aspect, and an apparatus (for example, a core network device) configured to implement the method provided in the third aspect/sixth aspect.

For the seventh aspect to the thirteenth aspect and technical effect that may be achieved in the seventh aspect to the thirteenth aspect, refer to the descriptions of the technical effect that may be achieved in the possible solutions in the first aspect to the sixth aspect. Details are not described herein again.

BRIEF DESCRIPTION OF DRAWINGS

FIG. 1 is a diagram of a network architecture to which an embodiment of this application is applicable;
FIG. 2 is a diagram of eDRX paging to which an embodiment of this application is applicable;
FIG. 3 is a diagram of a scenario of discontinuous coverage in an NTN according to an embodiment of this application;
FIG. 4 is a flowchart of a paging method according to an embodiment of this application;
FIG. 5 is a diagram of a location of a coverage time window according to an embodiment of this application;
FIG. 6 is a flowchart of a paging method according to an embodiment of this application;
FIG. 7 is a flowchart of a paging method according to an embodiment of this application;
FIG. 8 is a flowchart of a paging method according to an embodiment of this application;
FIG. 9 is a diagram of a structure of a paging apparatus according to an embodiment of this application; and
FIG. 10 is a diagram of a structure of a paging apparatus according to an embodiment of this application.

DESCRIPTION OF EMBODIMENTS

The following describes the technical solutions in embodiments of this application with reference to the accompanying drawings in embodiments of this application. All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to give an example, an illustration, or a description. Any embodiment or design scheme described as an "example" in this application should not be explained as being more preferred or having more advantages than another embodiment or design scheme. Exactly, the word "example" is used to present a concept in a specific manner. In embodiments of this application, "of (of)", "corresponding, relevant (corresponding, relevant)", and "corresponding (corresponding)" may be interchangeably used sometimes. It should be noted that meanings expressed by the terms are consistent when differences are not emphasized.

The technical solutions in embodiments of this application may be applied to various communication systems, for example, an internet of things (internet of things, IoT), a narrow band internet of things (narrow band internet of things, NB-IoT), a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) communication system, for example, a long term evolution (long term evolution, LTE) system, a 5G communication system, for example, a new radio (new radio, NR) system, and a future evolved communication system, for example, a 6th generation (6th generation, 6G) mobile communication system.

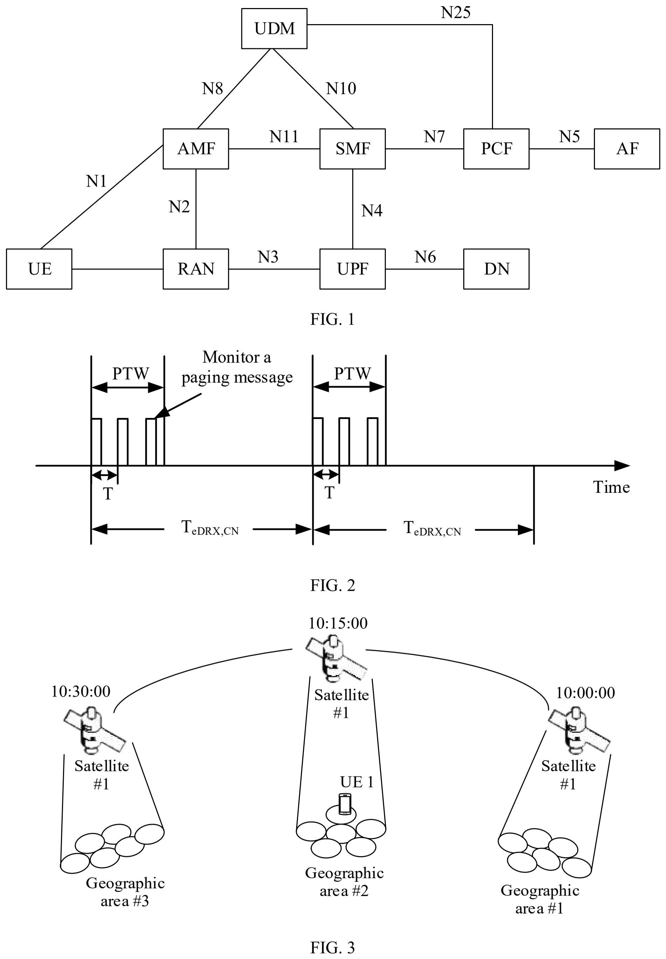

For example, FIG. 1 is a diagram of a system architecture according to an embodiment of this application. A network architecture may be a network architecture of a 5G communication system. As shown in FIG. 1, the network architecture includes a terminal device, an access network device, various types of core network elements/function entities, and a data network. The following describes in detail devices and network elements in the system architecture.

(1) Terminal device

In this application, the terminal device is a device that provides voice and/or data connectivity for a user. The terminal device may also be referred to as user equipment (user equipment, UE), a terminal (terminal), an access terminal, a terminal unit, a terminal station, a mobile station (mobile station, MS), a remote station, a remote terminal, a mobile terminal (mobile terminal, MT), a wireless communication device, a terminal agent, terminal equipment, or the like.

For example, the terminal device may be a handheld device having a wireless connection function, or may be a vehicle, a vehicle-mounted device (for example, a vehicle-mounted communication apparatus or a vehicle-mounted communication chip), or the like having a communication function. Currently, some examples of the terminal device are as follows: a mobile phone (mobile phone), a cordless phone, a session initiation protocol (session initiation protocol, SIP) phone, a wireless local loop (wireless local loop, WLL) station, a personal digital assistant (personal digital assistant, PDA) device, a handheld device or a computing device having a wireless communication function, another processing device connected to a wireless modem, a tablet computer, a computer having a wireless transceiver function, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device may be deployed on land, including an indoor or outdoor terminal device, a handheld terminal device, a wearable terminal device, or a vehicle-mounted terminal device; or may be deployed on a water surface (for example, on a ship); or may be deployed in air (for example, on an airplane, a balloon, or a satellite). A specific technology, a device form, an application scenario, and a name that are used by the terminal device are not limited in embodiments of this application.

(2) Access network

In this application, the access network is deployed at a location close to the terminal device, provides a network access function for an authorized user in a specific area, and can determine, based on a user level, a service requirement, and the like, transmission tunnels of different quality to transmit user data. The access network can manage and properly use resources of the access network, provide an access service for the terminal device as required, and forward a control signal and service data between the terminal device and the core network.

An access network device is deployed in the access network, and is configured to connect the terminal device to a wireless network. The access network device may be usually connected to a core network through a wired link (for example, an optical fiber cable). The access network device may also be referred to as a RAN device/node or a base station.

For example, the access network device may include a base station, an evolved NodeB (evolved NodeB, eNodeB) in an LTE system or an evolved LTE system (LTE-Advanced, LTE-A), a next generation NodeB (next generation NodeB, gNB) in a 5G communication system, a transmission reception point (transmission reception point, TRP), a baseband unit (base band unit, BBU), an access point (access point, AP) in a wireless local area network (wireless local area networks, WLAN), an integrated access and backhaul (integrated access and backhaul, IAB) node, a base station in a future mobile communication system, or an access node in a Wi-Fi system. Alternatively, a radio access network device may be a module or unit that completes some functions of a base station, for example, a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

The access network device may be deployed on land, including an indoor or outdoor terminal device, a handheld terminal device, a wearable terminal device, or a vehicle-mounted terminal device; or may be deployed on a water surface (for example, on a ship); or may be deployed in air (for example, on an airplane, a balloon, or a satellite). A specific technology, a device form, an application scenario, and a name that are used by the access network device are not limited in embodiments of this application. In embodiments of this application, the access network device may be referred to as an access network (AN) device for short. Unless otherwise specified, the access network device in the following may be an access network device.

(3) Data network

The data network (data network, DN) is used to provide a service for a user. In an actual communication process, a client is usually located on the terminal device, and a server is usually located in the data network. The data network may be a private network, for example, a local area network, may be an external network that is not managed and controlled by an operator, for example, an internet (Internet), or may be a dedicated network jointly deployed by operators, for example, a network that provides an IP multimedia network subsystem (IP multimedia core network subsystem, IMS) service.

(4) Core network

The core network is used for maintaining subscription data of a mobile network, managing a network element of the mobile network, and providing functions such as session management, mobility management, policy management, and security authentication for the terminal device.

Specific content may include: The core network provides network access authentication for the terminal device when the terminal device is attached; allocates a network resource to the terminal device when the terminal device has a service request; updates a network resource for the terminal device when the terminal device moves; provides a fast recovery mechanism for the terminal device when the terminal device is idle; releases a network resource for the terminal device when the terminal device detaches; and provides a data routing function for the terminal device when the terminal device has service data, for example, forwards uplink data to the data network, or receives downlink data from the data network and forwards the downlink data to the (radio) access network, to send the downlink data to the terminal device.

Specifically, the core network element includes a user plane function (user plane function, UPF) network element, an access and mobility management function (access and mobility management function, AMF) network element, a session management function (session management function, SMF) network element, a policy control function (policy control function, PCF) network element, a unified data management (unified data management, UDM) network element, and an application function (Application Function, AF) network element.

The UPF network element is mainly used for connecting to an external network, and forwarding a user data packet according to a routing rule of the SMF network element, for example, sending uplink data to the data network or another UPF network element, and sending downlink data to another UPF network element or the access network device.

The AMF network element is mainly used for access management and mobility management of the terminal device, for example, used for state maintenance of the terminal device, reachability management of the terminal device, forwarding of a mobility management non-access-stratum (mobility management non-access-stratum, MM NAS) message, and forwarding of a session management (session management, SM) N2 message.

The SMF network element is mainly used for session management in a mobile network, including establishing a session for the terminal device, and allocating and releasing a resource for the session. The resource includes session quality of service (quality of service, QoS), a session path, a forwarding rule, and the like. For example, the SMF network element is used for allocating an internet protocol (internet protocol, IP) address to the terminal device or selecting a UPF network element that provides a packet forwarding function.

The PCF network element is mainly used for user policy management, including policy authorization, quality of service, and generation of a charging rule, and delivering a corresponding rule to the UPF network element via the SMF network element, to complete installation of a corresponding policy and rule.

The UDM network element is mainly used for managing and controlling user data, for example, managing subscription information, including obtaining the subscription information and providing the subscription information for another network element (for example, an AMF network element); generating a 3GPP authentication credential for the terminal device; and registering and maintaining a network element that currently serves the terminal device (for example, an AMF represented by AMF ID1 is a current serving AMF of the terminal device, namely, a serving AMF). It should be noted that, although not shown in FIG. 1, the network architecture shown in FIG. 1 may further include a unified data repository (unified data repository, UDR) network element, and a function of the UDM network element may be implemented through interaction with the UDR network element. The UDR network element is configured to store data needed when the UDM network element performs an operation of the UDM network element. The UDM network element is configured to interact with another network element. During actual implementation, the UDM network element and the UDR network element may be two independent physical entities, or the UDR network element may be integrated into the UDM network element. This is not limited.

The AF network element is responsible for providing a service for a 3GPP network, for example, affecting service routing and interacting with a PCF for policy control.

It may be understood that an interface between the access network device and the AMF network element in FIG. 1 is referred to as an N2 interface. An interface between the access network device and the UPF network element is referred to as an N3 interface. An interface between the UPF network element and the SMF network element may be referred to as an N4 interface. An interface between the UPF network element and the data network is referred to as an N6 interface.

In a future communication system, for example, a 6th generation (6th generation, 6G) communication system, the foregoing network element or device may still use a name of the network element or device in a 4th generation (4th generation, 4G) or 5G communication system, or have another name. A function of the network element or the device may be completed by one independent network element, or may be jointly completed by several network elements. This is not limited in embodiments of this application. During actual deployment, the network elements may be co-located. For example, the access and mobility management function network element may be co-located with the session management function network element. The session management function network element may be co-located with the user plane function network element. When two network elements are co-located, interaction between the two network elements provided in embodiments of this application becomes an internal operation of the co-located network elements or may be omitted.

The various possible network elements/function entities in the network architecture may be network elements in a hardware device, may be software functions running on dedicated hardware, or may be virtualized functions instantiated on a platform (for example, a cloud platform). Optionally, the network elements or function entities may be implemented by one device, may be jointly implemented by a plurality of devices, or may be implemented by different function modules in one device. This is not specifically limited in embodiments of this application.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with evolution of the communication system architecture and emergence of new service scenarios, the technical solutions provided in embodiments of this application are also applicable to similar technical problems.

In FIG. 1, the terminal device may be configured to be in a radio resource control (radio resource control, RRC) idle state, an RRC inactive (INACTIVE) state, or an RRC active state. Paging is used to notify a terminal device in an idle state or an inactive state to set up a service (that is, to be called), or notify the terminal device that a system message changes, and the terminal device needs to re-read a changed system broadcast message, or notify the terminal device to receive earthquake and tsunami warning system (earthquake and tsunami warning system, ETWS) information. Based on an initiator of a paging message, paging may be classified into CN paging and RAN paging. A paging message for CN paging is initiated by a core network element, and a paging message for RAN paging is initiated by an access network device. The CN paging is mainly used to page a terminal device in an idle state, and the RAN paging is used to page a terminal device in an inactive state.

A paging cycle of the terminal device in the inactive state is used as an example. The paging cycle of the terminal device in the inactive state may be a DRX cycle or an inactive extended DRX (extended DRX, eDRX) cycle.

(1) DRX cycle

To reduce power consumption of monitoring a paging message, a discontinuous reception (discontinuous reception, DRX) technology is applied to a non-connected state. In DRX in a connected state, each DRX cycle (DRX cycle) includes two time periods: "On Duration" and "Opportunity for DRX". "On Duration" may be referred to as duration, and "Opportunity for DRX" may be referred to as a DRX opportunity. In "On Duration" UE is in an active state, and monitors and receives a PDCCH. In "Opportunity for DRX" the UE is in a sleep state, and does not monitor the PDCCH, to reduce power consumption.

In DRX in the non-connected state, there is no definition of the foregoing two time periods. The UE wakes up itself at a specified time unit based on a specific non-connected state DRX cycle, to monitor whether the network device pages the UE. The time unit is negotiated (agreed) by the network device and the UE. If the UE monitors that the network device pages the UE, the UE switches to an active state. If the UE does not monitor that the network device pages the UE, the UE continues to maintain a current state. The time unit in which the UE monitors the paging may be referred to as a paging occasion (paging occasion, PO). In LTE, one paging frame (paging frame, PF) includes 10 subframes whose indexes are sequentially 0 to 9, and a time domain location of a PO may be a subframe whose index is 7 in the PF. In NR, a PO is a set of PDCCH monitoring occasions (monitoring occasion), and is obtained based on corresponding search space. The PO is located in a paging frame, or a start location of the PO is located in a paging frame.

Based on a source of a paging message, DRX configurations may be classified into idle DRX for paging (IDLE DRX for CN paging) from the core network and inactive DRX for paging (INACTIVE DRX for RAN paging) from the access network. The following describes a process of determining a paging DRX cycle. Specifically, if the UE needs to use a specific (specific) idle DRX (idle DRX) configuration, for example, a shorter DRX cycle, the UE may negotiate with the core network by using NAS signaling. The UE monitors the paging message by using a min{specific DRX cycle configured by a core network (specific DRX cycle configured by CN), default DRX cycle configured by SIB1 (default DRX cycle configured by SIB1)} cycle.

If the UE needs to use a specific inactive DRX configuration, for example, a shorter DRX cycle, the base station may provide a specific cycle when releasing the UE to INACTIVE. Specially, in this case, the INACTIVE UE also needs to use an idle DRX configuration to monitor CN paging, to cope with a special case in which an RRC state between the network and the UE is not aligned. Therefore, the UE monitors the paging message by using a min{specific DRX cycle configured by CN if configured, default DRX cycle configured by SIB1, specific DRX cycle configured by RAN} cycle.

After a paging DRX cycle T is determined, the UE may further determine the PF and the PO by using the following formula. A system frame number (system frame number, SFN) that meets the following formula may be used as the PF:

$$\text{SFN mod } T = (T \text{ div } N) * (UE\_ID \text{ mod } N) \cdots (1).$$

…

One PF may include a plurality of POs, and an index i_s of a PO monitored by the terminal device in the PF may satisfy the following formula:

$$i\_s = \text{floor } (UE\_ID/N) \text{ mod } Ns \cdots (2).$$

In the foregoing formulas (1) and (2), N and Ns are obtained through system information broadcast, N is a quantity of PFs included in one paging cycle T, Ns is a quantity of paging occasions, mod represents a modulo operation, floor () represents a rounding down operation, and UE_ID, T, and UE are associated with specific configurations of the UE.

Additionally, for an NR terminal, offset needs to be considered in the foregoing formula (1), that is:

$$(\text{SFN}+\text{PF\_offset}) \text{ mod } T = (T \text{ div } N) * (UE\_ID \text{ mod } N).$$

PF_offset is obtained through system information broadcast.

(2) eDRX cycle

To further reduce power consumption, the DRX cycle may be prolonged, so that the terminal device can enter a sleep state for longer time. For the eDRX cycle of the terminal device in an idle state, the eDRX cycle may be extended to more than three hours. Considering that an error may be introduced due to long sleep time, a concept of a paging time window (paging time window, PTW) is also introduced to improve paging reliability. One PTW length may cover a plurality of POs, and the UE needs to monitor paging in the PTW based on the DRX cycle.

It is assumed that an eDRX cycle corresponding to a CN paging message is represented by $T_{cDRX,CN}$. If the eDRX cycle corresponding to the CN paging message is greater than or equal to 10.24 seconds (second, s), a PTW may be configured in the eDRX cycle. For example, as shown in FIG. 2, in the eDRX cycle $T_{cDRX,CN}$ corresponding to the CN paging message, the terminal device enters a sleep state outside the PTW. In the PTW, the terminal device monitors the CN paging message at the cycle T.

When the PTW exists, in a process in which the terminal device monitors the paging message, the terminal device and the access network device need to determine a paging hyperframe (paging hyperframe, PH) in which the PTW is located and an SFN corresponding to a start location of the PTW in the paging hyperframe. One hyperframe includes 1024 system frames. The terminal device may determine a location of a paging frame (paging frame, PF) in the PTW, to perform monitoring at a PO in the PF. The PO is located in the paging frame, or a start location of the PO is located in the paging frame.

A hyperframe corresponding to a hyper system frame number (hyper system frame number, H-SFN) that satisfies the following form may be used as the PH in which the PTW is located:

$$\text{H-SFN mod } T_{cDRX,CN} = (\text{UE\_ID\_H mod } T_{cDRX,CN}) \cdots (3).$$

$T_{cDRX,CN}$ represents an eDRX cycle of the CN paging message, and is in a unit of a hyperframe. UE_ID_H is determined based on an identifier of the terminal device. For example, UE_ID_H is 13 most significant bits of a hash identifier, and the hash identifier is determined based on identifier information of the terminal device. For example, the identifier information of the terminal device is a 5G serving-temporary mobile subscriber identity (serving-temporary mobile subscriber identity, s-TMSI) of the terminal device. 32 least significant bits of the 5G s-TMSI are used, and a frame check sequence of the 32 least significant bits is used as the hash identifier. mod represents a modulo operation.

The frame number corresponding to the start location of the PTW in the PH may be determined according to the following formula:

$$\text{SFN} = 256 * i_{cDRX,CN}, \text{ where } -i_{cDRX,CN} = \text{floor (UE\_ID\_H mod } T_{cDRX,CN}) \text{ mod } 4 \cdots (4).$$

It should be noted that when the eDRX cycle is 512 (that is, 5.12s), the PTW is not used. In this case, the eDRX cycle may be directly used as T in the formula for determining the PF/PO, to determine the PF and the PO, and the UE wakes up at intervals of the eDRX cycle to monitor the paging message.

The following describes a scenario of discontinuous coverage in a non-terrestrial network (non-terrestrial network, NTN) in embodiments of this application. As shown in FIG. 3, a satellite #1 may move to different locations at different times, and corresponding networks may cover different geographic areas. For example, as shown in FIG. 3, a geographic area #1 is covered by a network at 10:00:00, a geographic area #2 is covered by a network at 10: 15:00, and a geographic area #3 is covered by a network at 10:30:00. It is assumed that time at which a network covers UE 1 is denoted as a coverage time window (coverage window). Duration of the coverage window varies from several seconds to several minutes, and depends on a minimum elevation angle and a constellation. It should be understood that if there are a plurality of satellite orbits or there are a plurality of satellites on an orbit, the UE 1 is covered by a network in a plurality of coverage windows. An interval between the plurality of coverage windows ranges from several minutes to several hours, and a specific value of the interval depends on a location of the UE 1, the minimum elevation angle, and the constellation.

It should be understood that the coverage window may also be denoted as another name, for example, reachable time. This is not limited in this application.

The UE may provide information about a predicted coverage time window (coverage window) based on location information and ephemeris information of the UE. Then, the UE may report the information about the predicted coverage time window (coverage window) to the network, or the network may obtain coverage time window (coverage window) information of the UE based on an application server or the like. Alternatively, the UE may report location information (non-coverage window) of the UE to the network, and then the network obtains the coverage time window (coverage window) information of the UE based on the location information reported by the UE. Because the used ephemeris information, location information, and the like are consistent, a coverage window predicted by the network is consistent with the coverage window predicted by the UE. In this way, the UE may predict, based on the consistent coverage window information, whether to wake up on a paging occasion of the UE, and the network may determine, based on the consistent coverage window information, whether to send a paging message to the UE. In other words, it is assumed that the UE and the network have a consistent understanding of the coverage window. Because a location of a PTW is determined based on a parameter configured by the network, and the coverage window information cannot be configured by the network, if the UE and the network need to complete paging alignment at a consistent time point, the foregoing formulas (3) and (4) may be adjusted, so that a location of the PTW in time domain is aligned with a location of the coverage window in time domain. Alternatively, paging alignment between the UE and the network may be completed by using methods such as extending a plurality of paging cycles before/after the coverage window.

An error may also occur in the foregoing adjustment method performed based on the premise that the UE and the network have a consistent understanding of the coverage window. For example, the coverage window reported by the UE to the network is based on a location 1 (for example, a cell A). It is assumed that coverage window information corresponding to the network in the cell A is from 10:05:00 to 10:10:00. In this case, it is assumed that there is a paging message for the UE, the network may send the paging message. If the UE moves to a cell B, coverage window information corresponding to the cell B is from 09:57:00 to 10:03:00. In this case, the UE located in the cell B cannot receive the paging message because there is no network coverage from 10:05:00 to 10:10:00. In addition, because the network does not send the paging message in a coverage window (from 09:57:00 to 10:03:00) corresponding to the cell B, the UE does not receive the paging message.

In other words, how to align paging occasions of the network and the UE when the network and the UE have an inconsistent understanding of the coverage window is a problem to be resolved. In view of this, embodiments of this application provide a paging method, to implement coverage window-based paging alignment between the UE and the network.

The network architecture and the service scenario described in this application are intended to describe the technical solutions in this application more clearly, but do not constitute a limitation on the technical solutions provided in this application. A person of ordinary skill in the art may know that, with evolution of the network architecture and emergence of new service scenarios, the technical solutions provided in this application are also applicable to similar technical problems.

In this application, interaction between a terminal device, an access network device, and a core network device is used as an example for description. Operations performed by the access network device may alternatively be performed by a module inside the access network device. For example, the module may be a chip of the access network device. Operations performed by the terminal device may alternatively be performed by a module inside the terminal device. For example, the module may be a chip of the terminal device. Operations performed by the core network device may alternatively be performed by a module inside the core network device. For example, the module may be a chip of the core network device. It may be understood that a specific structure of an execution entity of the method provided in embodiments of this application is not particularly limited in the following embodiments, provided that a program that records code of the method provided in embodiments of this application can be run to perform communication according to the method provided in embodiments of this application. For example, the execution entity may be a terminal device or a functional module that can invoke and execute a program in the terminal device, or may be an access network device or a functional module that can invoke and execute a program in the access network device.

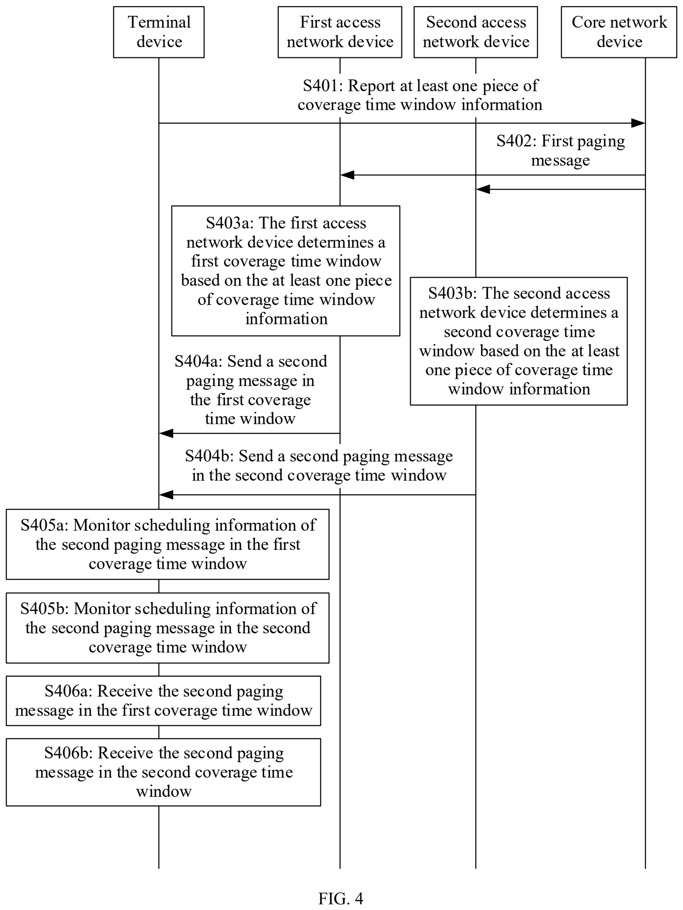

With reference to the foregoing descriptions, FIG. 4 is a schematic flowchart of a paging method according to an embodiment of this application. As shown in FIG. 4, the method includes the following steps.

S401: A terminal device reports at least one piece of coverage time window information to a core network device.

In some embodiments, the terminal device may report the at least one piece of coverage time window (coverage window) information to the core network device. The at least one piece of coverage time window (coverage window) information may include a start location, an end location, and a time length of each coverage window. Correspondingly, the core network device may receive the at least one piece of coverage time window information reported by the terminal device.

In addition, the terminal device may further negotiate eDRX parameter configuration information, DRX parameter configuration information, and PTW information with the core network device. The eDRX parameter configuration information may include an eDRX cycle. The DRX parameter configuration information includes a DRX cycle. The PTW information may include a length of a paging time window, a start location of the paging time window, and an end location of the paging time window.

In some other embodiments, the terminal device may further report at least one piece of location information to the core network device. Correspondingly, after receiving the at least one piece of location information, the core network device may determine the at least one piece of coverage time window information based on a mapping relationship (a correspondence) between location information and coverage time window information. In other words, in this embodiment of this application, the terminal device may report the at least one piece of coverage time window information and/or the at least one piece of location information to the core network device. The terminal device may report only the at least one piece of coverage time window information to the core network device, or may report only the at least one piece of location information to the core network device, or may report both the at least one piece of coverage time window information and the at least one piece of location information to the core network device.

It should be noted that a location may be a cell, a tracking area (tracking area, TA), or other types of location information. Because sizes of geographic areas represented by different types of location information are different, duration of corresponding coverage windows is also different.

S402: The core network device separately sends a first paging message to a first access network device and a second access network device.

In some embodiments, the first paging message includes the at least one piece of coverage time window information, the eDRX parameter configuration information, the DRX parameter configuration information, and the PTW information. It should be understood that the first paging message may be an NGAP paging message.

In some other embodiments, the first paging message may further include the at least one piece of location information.

It should be understood that this embodiment of this application is described by using two access network devices, for example, the first access network device and the second access network device, as an example. In actual application, there may be more or fewer access network devices. This is not limited.

S403a: The first access network device determines a first coverage time window based on the at least one piece of coverage time window information.

S403b: The second access network device determines a second coverage time window based on the at least one piece of coverage time window information.

The first coverage time window is a coverage time window corresponding to a first location, and the second coverage time window is a coverage time window corresponding to a second location. The coverage time window corresponding to the first location is a coverage time window corresponding to UE at the first location, and the coverage time window corresponding to the second location is a coverage time window corresponding to the UE at the second location. It should be understood that the location may be a cell, and the cell may be a cell of an access network device.

It is assumed that the first access network device and the second access network device are at different locations, after receiving the at least one piece of coverage time window information, the first access network device may determine, based on the at least one piece of coverage time window information, that the coverage time window corresponding to the first location is the first coverage time window. Similarly, after receiving the at least one piece of coverage time window information, the second access network device may determine, based on the at least one piece of coverage time window information, that the coverage time window corresponding to the second location is the second coverage time window.

In this application, the first location refers to a location of an area (for example, a first area) covered by the first access network device, and the second location refers to a location of an area (for example, a second area) covered by the second access network device.

S404a: The first access network device sends a second paging message to the terminal device in the first coverage time window.

S404b: The second access network device sends a second paging message to the terminal device in the second coverage time window.

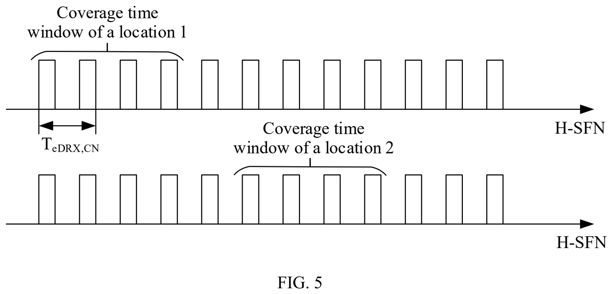

In some embodiments, access network devices at different locations may send paging messages to the terminal device in coverage time windows (coverage window) corresponding to the access network devices. The second paging message may include identification information of the UE, for example, an IMSI or a 5G-S-TMSI. It should be understood that the second paging message may be a Uu paging message. For example, as shown in FIG. 5, a coverage window 1 corresponding to a location 1 is different from a coverage window 2 corresponding to a location 2. An access network device located at the location 1 may send a Uu paging message in the coverage window 1, and an access network device located at the location 2 may send a Uu paging message in the coverage window 2.

After receiving the first paging message, the access network device may calculate a PH, a PO, a PF, and a PTW based on the eDRX parameter configuration information and the DRX parameter configuration information that are carried in the first paging message. For specific calculation formulas, refer to the foregoing formula (1), formula (2), formula (3), and formula (4).

S405a: The terminal device monitors scheduling information of the second paging message in the first coverage time window.

S405b: The terminal device monitors scheduling information of the second paging message in the second coverage time window.

Before receiving the second paging message, the terminal device may calculate a PH, a PO, a PF, and a PTW based on the eDRX parameter configuration information and the DRX parameter configuration information that are carried in the first paging message. For specific calculation formulas, refer to the foregoing formula (1), formula (2), formula (3), and formula (4). In addition, the terminal device may monitor the scheduling information of the second paging message. When determining to page the terminal device, the access network device may send the scheduling information of the second paging message to the terminal device in the first coverage time window. For example, for a CN paging message, the access network device may receive the first paging message from the core network device, to determine to page the terminal device. The access network device then sends the scheduling information of the second paging message to the terminal device in the first coverage time window.

In this application, how the access network device specifically schedules the paging message is not limited. For example, the scheduling information may be downlink control information (downlink control information, DCI) scrambled by using a paging radio network temporary identity (paging radio network temporary identity, P-RNTI). When determining to send the paging message, the access network device may send, on a PDCCH in a coverage time window, DCI scrambled by using the P-RNTI. The DCI is used to schedule the paging message. When sending the DCI, the access network device further sends the paging message on a physical downlink shared channel (physical downlink shared channel, PDSCH) scheduled by using the DCI. A specific process is not described again.

It should be understood that, in this application, that the terminal device monitors the scheduling information of the paging message may also mean that the terminal device monitors the paging message, and the meanings of the two may be the same.

S406a: The terminal device receives the second paging message in the first coverage time window.

S406b: The terminal device receives the second paging message in the second coverage time window.

When monitoring the scheduling information of the second paging message, the terminal device may receive the second paging message in a corresponding coverage time window based on a time-frequency resource indicated by the scheduling information. For example, if the terminal device is at the location 1, the terminal device monitors the scheduling information of the second paging message based on the first coverage time window. If receiving the scheduling information of the second paging message, the terminal device may receive the second paging message in the first coverage time window. After the terminal device moves to another location, for example, the location 2, the terminal device monitors and receives the second paging message in a corresponding second coverage time window.

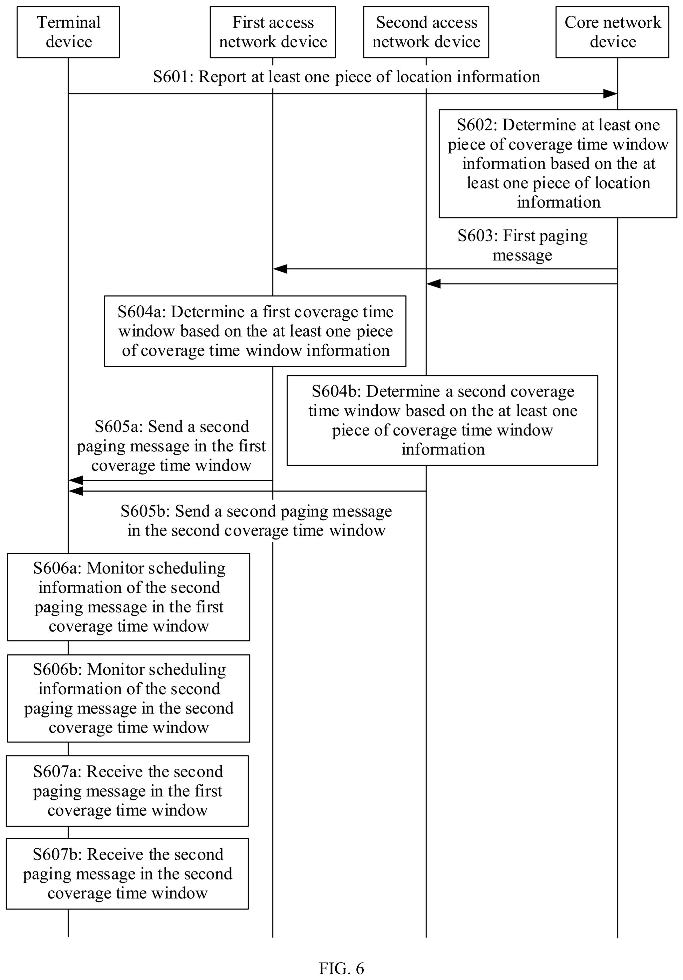

FIG. 6 is a schematic flowchart of another paging method according to an embodiment of this application. As shown in FIG. 6, the method includes the following steps.

S601: A terminal device reports at least one piece of location information to a core network device.

In some embodiments, the terminal device may report one or more pieces of location information to the core network device. For example, the terminal device may report only location information of a current location, and location information of another location may be obtained by the core network device through inference based on a movement track of the terminal device. Alternatively, the core network device may infer, based on the location information (a TAC 1 in an NTN cell) reported by the terminal device, another location set (a TAC set including the TAC 1 in the NTN cell) that does not trigger location update reporting. For another example, the terminal device may also report location information of a plurality of locations.

In some other embodiments, when reporting the at least one piece of location information to the core network device, the terminal device may further report at least one piece of coverage time window information.

S602: The core network device determines the at least one piece of coverage time window information based on the at least one piece of location information.

After receiving the at least one piece of location information, the core network device may determine, based on a mapping relationship between location information and coverage time window information, the at least one piece of coverage time window information corresponding to the at least one piece of location information.

S603: The core network device separately sends a first paging message to a first access network device and a second access network device.

In some embodiments, the first paging message includes the at least one piece of coverage time window information.

In some other embodiments, the first paging message may further include a first location identifier set, for example, a TAI list.

S604a: The first access network device determines a first coverage time window based on the at least one piece of coverage time window information.

S604b: The second access network device determines a second coverage time window based on the at least one piece of coverage time window information.

S605a: The first access network device sends a second paging message to the terminal device in the first coverage time window.

S605b: The second access network device sends a second paging message to the terminal device in the second coverage time window.

The first access network device is used as an example. The first access network device determines, based on the at least one piece of coverage time window information, that there is a cell that meets a condition in the first coverage time window. The cell that meets the condition means that the first access network device determines, based on a TAI list carried in an NGAP paging message received by the first access network device, that there is a cell of the first access network device that belongs to a TA indicated by the TAI list.

S606a: The terminal device monitors scheduling information of the second paging message in the first coverage time window.

S606b: The terminal device monitors scheduling information of the second paging message in the second coverage time window.

S607a: The terminal device receives the second paging message in the first coverage time window.

S607b: The terminal device receives the second paging message in the second coverage time window.

It should be understood that a difference between the embodiment shown in FIG. 6 and the embodiment shown in FIG. 4 lies in that in the embodiment shown in FIG. 4, the terminal device reports the at least one piece of coverage time window information to the core network device, but in the embodiment shown in FIG. 6, the terminal device reports the at least one piece of location information to the core network device, and then the core network device determines the at least one piece of coverage time window information based on the at least one piece of location information. Subsequent steps are the same as those in the embodiment shown in FIG. 4. Therefore, for details of S603, S604a, S604b, S605a, S605b, S606a, S606b, S607a, and S607b in the embodiment shown in FIG. 6, refer to the detailed descriptions of S403a, S403b, S404a, S404b, S405a, S405b, S406a, and S406b in the embodiment shown in FIG. 4. Details are not described herein again.

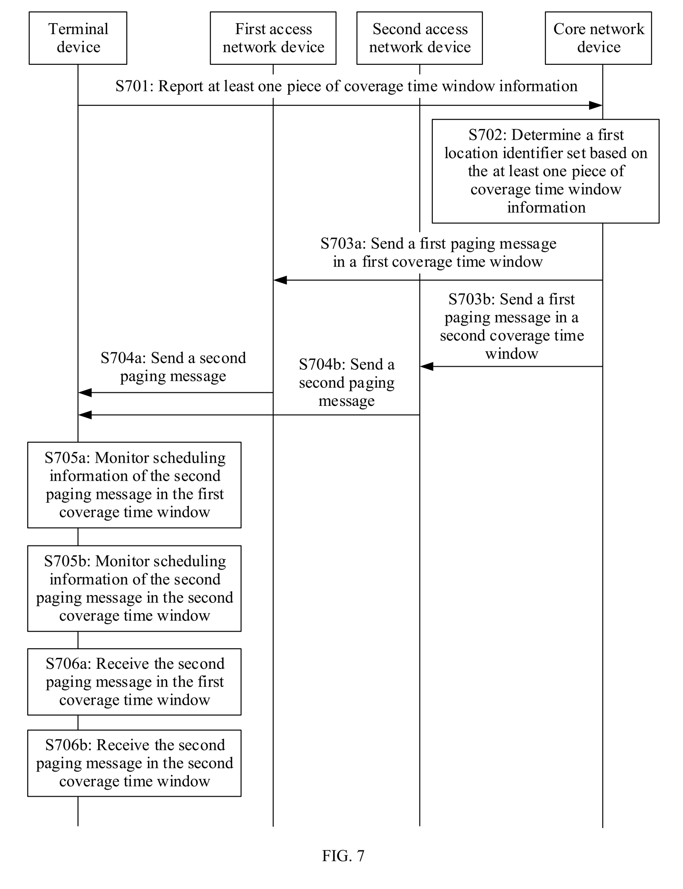

FIG. 7 is a schematic flowchart of another paging method according to an embodiment of this application. As shown in FIG. 7, the method may include the following steps.

S701: A terminal device reports at least one piece of coverage time window information to a core network device.

In some embodiments, in addition to reporting the at least one piece of coverage time window information to the core network device, the terminal device may further report at least one piece of location information.

S702: The core network device determines a first location identifier set based on the at least one piece of coverage time window information.

The first location identifier set may be one of the following sets: a tracking area identifier TAI list and a mapped cell identifier (mapped cell ID) list.

In this application, there is a correspondence between the first location identifier set and a coverage time window. In other words, there is a correspondence between each location identifier in the first location identifier set and the coverage time window. For example, a location identifier of a location 1 corresponds to a coverage time window 1, and a location identifier of a location 2 corresponds to a coverage time window 2. Alternatively, coverage time windows corresponding to different location identifiers may be the same. For example, a location identifier of a location 3 corresponds to a coverage time window 3, and a location identifier of a location 4 may also correspond to the coverage time window 3. This is not limited in this application. The core network device may determine, based on the foregoing correspondence, location information corresponding to at least one coverage time window, further determine a location identifier, select some location identifiers from the at least one location identifier to form the first location identifier set, and use a location corresponding to the first location identifier set as a specified paging area.

S703a: The core network device sends a first paging message to a first access network device in a first coverage time window.

S703b: The core network device sends a first paging message to a second access network device in a second coverage time window.

In some embodiments, the first paging message includes the first location identifier set and a second location identifier set. The first location identifier set is a location identifier set corresponding to a cell of an access network device to be paged. The second location identifier set is a location identifier set that is allocated by the core network to UE when the UE registers with a network. The first location identifier set TAI list in this embodiment of this application is different from a TAI list that is allocated by the core network to the UE during network registration. The first location identifier set TAI list in this application is associated with the coverage time window.

It is assumed that a cell of the first access network device corresponds to a first location identifier, and a cell of the second access network device corresponds to a second location identifier. The first location identifier set includes the first location identifier and the second location identifier. In other words, the location identifier corresponding to the cell of the first access network device and the location identifier corresponding to the cell of the second access network device are both included in the first location identifier set.

In some other embodiments, the core network device may send the first paging message to all access network devices included in the second location identifier set. Then, the access network device determines, based on the first location identifier set included in the received first paging message, whether to send a paging message to a cell to which the access network device belongs. Alternatively, the core network device may send the first paging message to all access network devices. Then, the access network device determines, based on the first location identifier set, whether to send a paging message to the cell to which the access network device belongs. For example, if the first location identifier set is A, B, and C, and the second location identifier set is D, E, and F, and if a location identifier corresponding to the cell of the access network device is between A, B, C, D, E, and F, the first paging message needs to be sent.

In some other embodiments, the first paging message may further include the at least one piece of coverage time window information.

In the embodiment shown in FIG. 7, the core network device determines a paging area and a paging occasion. In other words, the core network device determines to send an NGAP paging message to which access network devices at what time. The access network device that needs to receive the paging may be represented by using the first location identifier set, for example, the TAI list. Alternatively, it may be understood as that an access network device corresponding to a location identifier in the first location identifier set can receive the NGAP paging message sent by the core network device.

For the paging occasion, the core network device may determine, based on a mapping relationship between location information and a coverage time window, a coverage time window corresponding to each piece of location information. Then, the core network device may send the NGAP paging message in the coverage time window corresponding to the location corresponding to the cell of the access network device. For example, a coverage time window corresponding to a cell of the first access network device is the first coverage time window, and a coverage time window corresponding to a cell of the second access network device is the second coverage time window. In addition, if the location identifier corresponding to the cell of the first access network device and the location identifier corresponding to the cell of the second access network device are in the TAI list, the core network device may send the NGAP paging message to the first access network device in the first coverage time window, and send the NGAP paging message to the second access network device in the second coverage time window.

S704a: The first access network device sends a second paging message to the terminal device.

S704b: The second access network device sends a second paging message to the terminal device.

S705a: The terminal device monitors scheduling information of the second paging message in the first coverage time window.

S705b: The terminal device monitors scheduling information of the second paging message in the second coverage time window.

S706a: The terminal device receives the second paging message in the first coverage time window.

S706b: The terminal device receives the second paging message in the second coverage time window.

It should be understood that a difference between the embodiment shown in FIG. 7 and the embodiments shown in FIG. 4 and FIG. 6 lies in that in the embodiment shown in FIG. 7, the core network device determines the paging area and the paging occasion, that is, the core network specifies an access network device to which the first paging message is sent at specific time. In the embodiments shown in FIG. 4 and FIG. 6, the access network device determines the paging occasion, that is, the access network device determines specific time at which the second paging message is sent to the terminal device. In other words, in the embodiment shown in FIG. 7, the core network device only needs to specify an access network device to send the first paging message. In the embodiments shown in FIG. 4 and FIG. 6, the core network device sends the first paging message to all access network devices, and then the access network device determines, based on the location information, the access network device that can send the second paging message to the terminal device. For other steps, refer to the detailed descriptions in the embodiments shown in FIG. 4 and FIG. 6. Details are not described herein again.

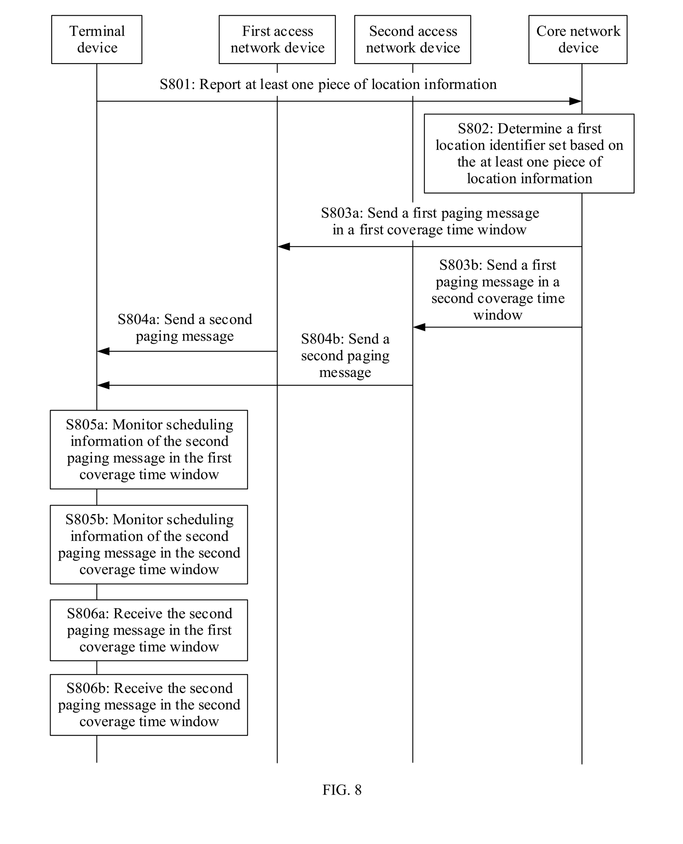

FIG. 8 is a schematic flowchart of still another paging method according to an embodiment of this application. As shown in FIG. 8, the method may include the following steps.

S801: A terminal device reports at least one piece of location information to a core network device.

In some embodiments, the terminal device may further report at least one piece of location information to the core network device.

In some other embodiments, the terminal device may further report at least one piece of coverage time window information to the core network device.

S802: The core network device determines a first location identifier set based on the at least one piece of location information.

The first location identifier set may be one of the following sets: a tracking area identifier TAI list and a mapped cell identifier (mapped cell ID) list.

In some embodiments, the core network device may select a specified paging area based on the at least one piece of location information, and form the first location identifier set by using the selected specified paging area.

S803a: The core network device sends a first paging message to a first access network device in a first coverage time window.

S803b: The core network device sends a first paging message to a second access network device in a second coverage time window.

In some embodiments, the first paging message includes the first location identifier set and a second location identifier set.

In some other embodiments, the first paging message may further include the at least one piece of coverage time window information.

S804a: The first access network device sends a second paging message to the terminal device.

S804b: The second access network device sends a second paging message to the terminal device.

S805a: The terminal device monitors scheduling information of the second paging message in the first coverage time window.

S805b: The terminal device monitors scheduling information of the second paging message in the second coverage time window.

It should be understood that the location information reported by the terminal device in S801 may be inconsistent with location information of the terminal device when the terminal device monitors the second paging message. For example, the terminal device is located at a location 1 in S801, and the reported location information is location information of the location 1. When the terminal device moves to a location 2, if it is determined that the terminal device is paged, the terminal device may monitor the second paging message in a coverage time window corresponding to the location 2.

S806a: The terminal device receives the second paging message in the first coverage time window.

S806b: The terminal device receives the second paging message in the second coverage time window.

It should be understood that a difference between the embodiment shown in FIG. 8 and the embodiment shown in FIG. 7 lies only in that information reported by the terminal device to the core network device is different. In the embodiment shown in FIG. 7, the terminal device reports the at least one piece of coverage time window information, and in the embodiment shown in FIG. 8, the terminal device reports the at least one piece of location information. Specific implementations of other steps are the same as those in the embodiment shown in FIG. 7. For details, refer to the detailed descriptions in the embodiment shown in FIG. 7. Details are not described herein again.

It should be noted that all or some of the foregoing embodiments provided in this application may be freely and randomly combined. A combined technical solution also falls within the protection scope of this application. For example, the embodiment shown in FIG. 4 and the embodiment shown in FIG. 7 may be combined. For example, the first paging message NGAP paging sent by the core network to the access network device may carry both the at least one piece of coverage time window information and the first location identifier set. This is not limited to carrying only any one of the at least one piece of coverage time window information and the first location identifier set. For another example, the embodiment shown in FIG. 5 and the embodiment shown in FIG. 8 may be combined. For example, the first paging message NGAP paging sent by the core network to the access network device may carry the first location identifier set, or may carry the at least one piece of coverage time window information. For another example, the terminal device may report the at least one piece of coverage time window information and/or the at least one piece of location information to the core network device. This is not specifically limited in this application.

The foregoing mainly describes the solutions provided in embodiments of this application from a perspective of interaction between a device and a network element. It may be understood that, to implement the foregoing functions, the access network device, the terminal device, and the core network may include corresponding hardware structures and/or software modules for performing the functions. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the access network device, the terminal device, and the core network may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

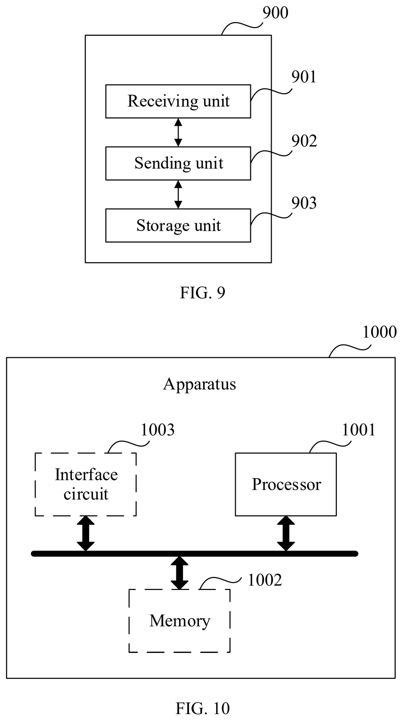

When the integrated unit is used, FIG. 9 is a possible example block diagram of an apparatus according to an embodiment of this application. As shown in FIG. 9, the apparatus 900 may include a receiving unit 901 and a sending unit 902. The receiving unit 901 is also referred to as a receiver, and the sending unit 902 is also referred to as a transmitter. The receiving unit 901 and the sending unit 902 are respectively configured to perform receiving and sending operations. The apparatus 900 may further include a storage unit 903, configured to store program code and/or data of the apparatus 900.

The apparatus 900 may be the terminal device, the access network device, or the core network in the foregoing embodiments, or may be a component (for example, a circuit or a chip) disposed in the terminal device, the access network device, or the core network. The receiving unit 901 and the sending unit 902 may support communication between the apparatus 900 and another device.

For example, in an embodiment, the receiving unit 901 is configured to receive a first paging message, where the first paging message includes at least one piece of coverage time window information. The sending unit 902 is configured to send a second paging message to a terminal device in a first coverage time window, where the first coverage time window is a coverage time window corresponding to a first location.

It should be understood that division of units in the apparatus is merely logical function division, and can be fully or partially integrated into a physical entity in actual implementation, or physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

FIG. 10 is a diagram of a structure of an apparatus according to an embodiment of this application. An apparatus 1000 may be the terminal device, the access network device, or the core network in the foregoing embodiments, and is configured to implement functions of the terminal device, the access network device, or the core network in the foregoing embodiments.

As shown in FIG. 10, the apparatus 1000 may include a processor 1001, a memory 1002, and an interface circuit 1003. The processor 1001 may be configured to: process a communication protocol and communication data, and control the apparatus 1000. The memory 1002 may be configured to store a program and data, and the processor 1001 may perform, based on the program, the method performed by the apparatus 1000 in embodiments of this application. The interface circuit 1003 may be configured for the apparatus 1000 to communicate with another device. The communication may be wired communication or wireless communication.

Alternatively, the memory 1002 may be externally connected to the apparatus 1000. In this case, the apparatus 1000 may include the interface circuit 1003 and the processor 1001. Alternatively, the interface circuit 1003 may be externally connected to the apparatus 1000. In this case, the apparatus 1000 may include the memory 1002 and the processor 1001. When both the interface circuit 1003 and the memory 1002 are externally connected to the apparatus 1000, the apparatus 1000 may include the processor 1001.

The apparatus 1000 shown in FIG. 10 can implement each process related to the access network device in the foregoing method embodiments. Operations and/or functions of modules in the apparatus 1000 shown in FIG. 10 are separately used to implement corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, a priority, or importance of the plurality of objects.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A paging method, applied to a first access network device, wherein the method comprises:

   receiving, by the first access network device, a first paging message, wherein the first paging message comprises at least one piece of coverage time window information; and
   sending, by the first access network device, a second paging message to a terminal device in a first coverage time window, wherein the first coverage time window is a coverage time window corresponding to a first location, and the at least one piece of coverage time window information comprises the first coverage time window.

2. The method according to claim 1, wherein the at least one piece of coverage time window information is reported by the terminal device to a core network device.

3. The method according to claim 1, wherein the at least one piece of coverage time window information is determined by a core network device based on at least one piece of location information reported by the terminal device.

4. The method according to claim 1, wherein the first coverage time window is determined by the first access network device based on the at least one piece of coverage time window information.

5. The method according to claim 1, wherein the first location is a location of an area covered by the first access network device.

6. A paging method, applied to a terminal device, wherein the method comprises:

   reporting, by the terminal device, at least one piece of coverage time window information to a core network device;
   monitoring, by the terminal device, scheduling information of a second paging message in a first coverage time window, wherein the first coverage time window is a coverage time window corresponding to a first location, and the first coverage time window is determined based on the at least one piece of coverage time window information; and
   receiving, by the terminal device, the second paging message.

7. The method according to claim 6, wherein the first location is a location of an area covered by a first access network device.

8. A paging method, applied to a core network device, wherein the method comprises:

   receiving, by the core network device, at least one piece of coverage time window information; and
   sending, by the core network device, a first paging message, wherein the first paging message comprises the at least one piece of coverage time window information.

9. A paging method, applied to a first access network device, wherein the method comprises:

   receiving, by the first access network device, a first paging message, wherein the first paging message comprises a first location identifier set and a second location identifier set; and
   sending, by the first access network device, a second paging message to a terminal device, wherein a cell of the first access network device corresponds to a second location identifier, and the first location identifier set comprises the second location identifier.

10. The method according to claim 9, wherein the first location identifier set is one of the following sets: a tracking area identifier TAI list and a mapped cell identifier (mapped cell ID) list.

11. The method according to claim 10, wherein there is a correspondence between the first location identifier set and a coverage time window.

12. A paging method, applied to a terminal device, wherein the method comprises:

reporting, by the terminal device, at least one piece of location information to a core network device;
monitoring, by the terminal device, scheduling information of the second paging message in a second coverage time window, wherein the second coverage time window is a coverage time window corresponding to a second location, the second coverage time window is associated with a first location identifier set, and the first location identifier set is determined based on the at least one piece of location information; and
receiving, by the terminal device, the second paging message.

13. A paging method, applied to a core network device, wherein the method comprises:

receiving, by the core network device, at least one piece of location information; and
sending, by the core network device, a first paging message in a second coverage time window, wherein the first paging message comprises a first location identifier set and a second location identifier set, the second coverage time window is associated with the first location identifier set, and the first location identifier set is determined based on the at least one piece of location information.

14. The method according to claim 13, wherein the first location identifier set is one of the following sets: a tracking area identifier TAI list and a mapped cell identifier (mapped cell ID) list.

15. A paging apparatus, comprising a module configured to perform the method according to any one of claims 1 to 14.

16. A paging apparatus, comprising a processor and a memory, wherein
the processor is configured to execute a computer program or instructions stored in the memory, and when the processor executes the computer program or the instructions, the method according to any one of claims 1 to 14 is performed.

17. A chip, comprising a processor, wherein the processor is coupled to a memory, and is configured to execute a computer program or instructions stored in the memory; and when the processor executes the computer program or the instructions, the method according to any one of claims 1 to 14 is performed.

18. A computer-readable storage medium, wherein the computer-readable storage medium stores instructions, and when the instructions are run on a computer, the computer is enabled to perform the method according to any one of claims 1 to 14.

19. A computer program product, storing computer-readable instructions, wherein when a paging apparatus reads and executes the computer-readable instructions, the paging apparatus is enabled to perform the method according to any one of claims 1 to 14.

FIG. 1

FIG. 2

FIG. 3

| Terminal device | First access network device | Second access network device | Core network device |
|---|---|---|---|

S401: Report at least one piece of
coverage time window information

S402: First paging
message

S403a: The first access
network device determines a
first coverage time window
based on the at least one piece
of coverage time window
information

S403b: The second access
network device determines a
second coverage time
window based on the at least
one piece of coverage time
window information

S404a: Send a second
paging message in
the first coverage
time window

S404b: Send a second paging message
in the second coverage time window

S405a: Monitor scheduling information of
the second paging message in the first
coverage time window

S405b: Monitor scheduling information of
the second paging message in the second
coverage time window

S406a: Receive the second paging
message in the first coverage time window

S406b: Receive the second paging
message in the second coverage time
window

FIG. 4

FIG. 5

| Terminal device | First access network device | Second access network device | Core network device |
|---|---|---|---|

S601: Report at least one piece of location information

S602: Determine at least one piece of coverage time window information based on the at least one piece of location information

S603: First paging message

S604a: Determine a first coverage time window based on the at least one piece of coverage time window information

S604b: Determine a second coverage time window based on the at least one piece of coverage time window information

S605a: Send a second paging message in the first coverage time window

S605b: Send a second paging message in the second coverage time window

S606a: Monitor scheduling information of the second paging message in the first coverage time window

S606b: Monitor scheduling information of the second paging message in the second coverage time window

S607a: Receive the second paging message in the first coverage time window

S607b: Receive the second paging message in the second coverage time window

FIG. 6

| Terminal device | First access network device | Second access network device | Core network device |
|---|---|---|---|

S701: Report at least one piece of coverage time window information

S702: Determine a first location identifier set based on the at least one piece of coverage time window information

S703a: Send a first paging message in a first coverage time window

S703b: Send a first paging message in a second coverage time window

S704a: Send a second paging message

S704b: Send a second paging message

S705a: Monitor scheduling information of the second paging message in the first coverage time window

S705b: Monitor scheduling information of the second paging message in the second coverage time window

S706a: Receive the second paging message in the first coverage time window

S706b: Receive the second paging message in the second coverage time window

FIG. 7

| Terminal device | First access network device | Second access network device | Core network device |
|---|---|---|---|

S801: Report at least one piece of location information

S802: Determine a first location identifier set based on the at least one piece of location information

S803a: Send a first paging message in a first coverage time window

S803b: Send a first paging message in a second coverage time window

S804a: Send a second paging message

S804b: Send a second paging message

S805a: Monitor scheduling information of the second paging message in the first coverage time window

S805b: Monitor scheduling information of the second paging message in the second coverage time window

S806a: Receive the second paging message in the first coverage time window

S806b: Receive the second paging message in the second coverage time window

FIG. 8

900

Receiving unit — 901

Sending unit — 902

Storage unit — 903

FIG. 9

1000

Apparatus

Interface circuit — 1003

Processor — 1001

Memory — 1002

FIG. 10

## INTERNATIONAL SEARCH REPORT

| International application No. |
|---|
| **PCT/CN2024/080723** |

| A. | CLASSIFICATION OF SUBJECT MATTER |
|---|---|

H04W 68/02(2009.01)i

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS, CNTXT, VEN, DWPI, WPABS, USTXT, EPTXT, WOTXT, IEEE, 3GPP, CNKI: 覆盖, 时间窗, 时刻, 对齐, 对准, 位置, 位移, 定位, 寻呼, DRX, paging, PTW, NTN, location, coverage window

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112087795 A (HUAWEI TECHNOLOGIES CO., LTD.) 15 December 2020 (2020-12-15) description, paragraphs [0150]-[0493] | 1-5, 9-11, 13-19 |
| X | NOKIA et al. "R2-2110705 On aspects of discontinuous coverage in IoT NTN" *3GPP TSG-RAN WG2 Meeting #116 Electronic R2-2110705*, 22 October 2021 (2021-10-22), text, sections 2.1-2.4 | 6-8, 12, 15-19 |
| A | CN 115413027 A (SPREADTRUM COMMUNICATIONS (SHANGHAI) CO., LTD.) 29 November 2022 (2022-11-29) entire document | 1-19 |
| A | WO 2021237693 A1 (GUANGDONG OPPO MOBILE COMMUNICATIONS CO., LTD.) 02 December 2021 (2021-12-02) entire document | 1-19 |
| A | WO 2023013531 A1 (NEC CORP.) 09 February 2023 (2023-02-09) entire document | 1-19 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 May 2024** | **18 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/080723**

| Patent document cited in search report | | | Publication date (day/month/year) | Patent family member(s) | | | Publication date (day/month/year) |
|---|---|---|---|---|---|---|---|
| CN | 112087795 | A | 15 December 2020 | WO | 2020248791 | A1 | 17 December 2020 |
| CN | 115413027 | A | 29 November 2022 | WO | 2022247861 | A1 | 01 December 2022 |
| WO | 2021237693 | A1 | 02 December 2021 | CN | 115362724 | A | 18 November 2022 |
| WO | 2023013531 | A1 | 09 February 2023 | GB | 202111281 | D0 | 15 September 2021 |

Form PCT/ISA/210 (patent family annex) (July 2022)

**EP 4 686 280 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310401590